# EUROPEAN PATENT SPECIFICATION

(11) **EP 1 965 500 B1**
(45) Date of publication and mention of the grant of the patent: **27.07.2011**
(21) Application number: 07445009.9
(22) Date of filing: 28.02.2007
(51) Int. Cl.: H04B 1/04, H04B 1/18, H04B 1/44, H04B 1/48

(54) **Antenna device and portable radio communication device comprising such antenna device**
Antennenvorrichtung und tragbare Funkkommunikationsvorrichtung damit
Dispositif d'antenne et dispositif de communication radio portable comportant un tel dispositif d'antenne

(43) Date of publication of application: 03.09.2008
(73) Proprietor: Laird Technologies AB, 164 22 Kista (SE)
(72) Inventor: Kaikkonen, Andrei, 16471 Kista (SE); Lindberg, Peter, 75229 Uppsala (SE)
(74) Representative: Estreen, Lars J.F.

(56) References cited:
- WO-A-00/72457
- GB-A- 2 335 116
- US-A- 5 678 199

## Description

### FIELD OF INVENTION

The present invention relates generally to antenna devices and more particularly to an antenna device for use in a radio communication device, such as a mobile phone, which is adapted for radio signals having a relatively low frequency, such as radio signals in the

FM band.

### BACKGROUND

Internal antennas have been used for some time in portable radio communication devices. There are a number of advantages connected with using internal antennas, of which can be mentioned that they are small and light, making them suitable for applications wherein size and weight are of importance, such as in mobile phones.

However, the application of internal antennas in a mobile phone puts some constraints on the configuration of the antenna element. In particular, in a portable radio communication device the space for an internal antenna arrangement is limited. These constraints may make it difficult to find a configuration of the antenna that provides for a wide operating band. This is especially true for antennas intended for use with radio signals of relatively low frequencies as the desired physical length of such antennas are large compared to antennas operating with relatively high frequencies.

One specific application operating in a relatively low frequency band is the FM radio application. The FM band is defined as frequencies between 88-108 MHz in Europe or between 76-110 MHz in the USA. Prior art conventional antenna configurations, such as loop antennas or monopole antennas, fitted within the casing of a portable radio communication device will result in unsatisfactory operation in that the antenna either has too bad performance over a sufficiently wide frequency band or sufficient performance over a too narrow frequency band.

US 5678199 describes a transmit/receive radio set having a transmitter output stage, a receiver input stage and an antenna switching device for change-over between transmission and reception by a single antenna. Two impedance transformers are provided at the output of the transmitter output stage. A switching circuit affects a change-over of the output impedance of the transmitter output stage during transmission and reception by controlling the impedance of at least one of the impedance transformers.

WO 00/72457 describes an antenna interface for a Time Division Duplex (TDD) radio transceiver. The antenna interface includes a single Balun circuit to convert a single-ended signal to/from differential signals and a single impedance matching circuit to match an impedance at an output of the single Balun circuit with an input impedance of a Low Noise Amplifier (LNA) of a receiver and to provide an output impedance of a Power Amplifier (PA) of a transmitter. The single impedance matching circuit is coupled to both the LNA and the PA. The LNA and the PA are based on CMOS technology and made within a single integrated circuit.

GB 2335116 describes a communication unit including a transmit amplifying device, an antenna and a signal receiver. During a receive mode the transmit amplifier remains coupled to the antenna but a bias is applied to the amplifying device to increase the output impedance of the transmit amplifier such that the transmit amplifier does not significantly load the received signals. A supply voltage may also be applied to the transmit amplifier in addition to the bias voltage in order to achieve a high receive mode output impedance.

A recent application for FM antennas in portable radio communication devices, such as MP3 players and mobile phones, is not only to operate for reception of FM signals but also for transmission thereof. This could be the case in FM transmitters for transmission of low power signals to a car stereo mounted in the car in which the user of the FM device is seated. It would in this and similar cases be advantageous to have a simple antenna solution for transmission and reception of low frequency signals, such as FM signals having a frequency around 100 MHz.

### SUMMARY OF THE INVENTION

An object of the present invention is to provide a simple and inexpensive antenna device for use in a portable radio communication device, which operates for both transmitting and receiving RF signals, such as signals in the FM band.

The invention is based on the realization that the transmitter and/or receiver parts of radio communication device can be directly connected to the same radiating element during operation of the respective part, i.e., that one radiating element is arranged to both transmit and receive signals with a minimum of circuitry and without a Single Pole, Dual Throw switch for effecting switching between transmission and reception.

An antenna device according to the invention is defined by the features of claim 1.

A portable radio communication device comprising such an antenna device is defined in claim 4.

The invention thus provides an antenna device wherein the radiating element can be used for both Tx and Rx with a minimum of circuitry.

Further preferred embodiments are defined in claims 2 and 3.

### BRIEF DESCRIPTION OF DRAWINGS

The invention is now described, by way of example, with reference to the accompanying drawings, in which:
FIG. 1 is a schematic diagram showing an antenna device according to the invention connected to a transmitter and a receiver circuit;
FIG. 2 is a diagram showing a first embodiment of an antenna device according to the invention;
FIG. 3 is a diagram showing a second embodiment of an antenna device according to the invention; and
FIG. 4 is a perspective partially cut-away view of an antenna device according to the invention mounted in a portable radio communication device.

### DETAILED DESCRIPTION OF THE INVENTION

In the following, a detailed description of preferred embodiments of an antenna device and a portable radio communication device according to the invention will be given.

In the following description and claims, the term radiating element is used. It is to be understood that this term is intended to cover electrically conductive elements arranged for transmitting and/or receiving radio signals.

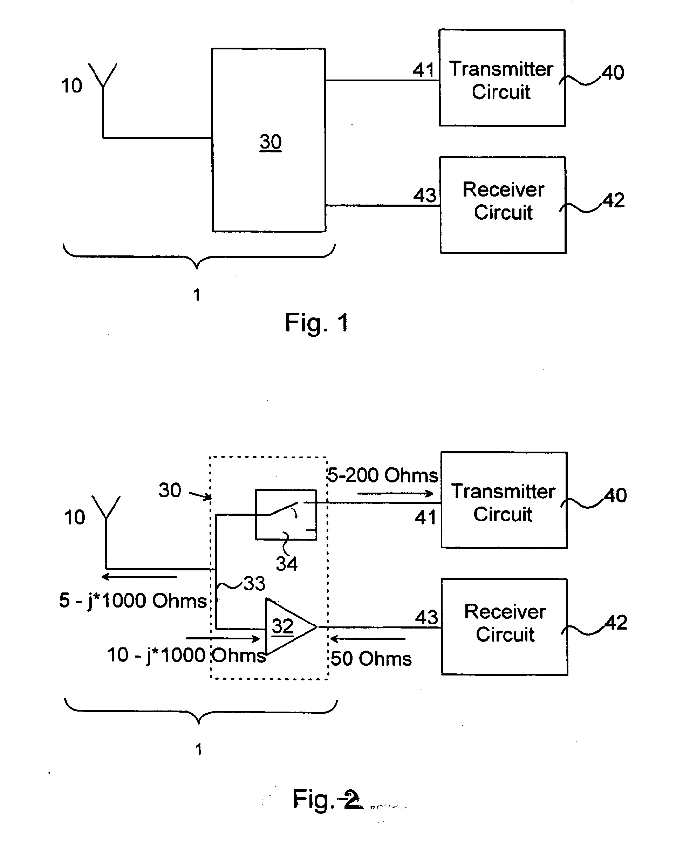

First with reference to FIG. 1, the general configuration of an antenna device 1 according to the invention is shown. It comprises a radiating element 10 in the form of a non-resonant piece of electrically conductive material, such as sheet metal or flex film. An example of the size thereof is 30 times 10 millimeters, placed on the back cover of a portable radio communication device, and thus constitutes an internal antenna radiator. A typical impedance value for this kind of antenna element is 5-j1000 Ohms but this varies with the application.

Alternatively, the radiating element 10 is in the form of an external cable, preferably an external headset cable but also other cables are possible. The second radiating element has a connector where the second antenna element 10 is connectable to the communication device.

The radiating element is connected to a filter and amplifier stage 30 arranged to block signals having a frequency above the operating frequency band and to allow signals in the operating frequency band by means of some suitable filter. It is preferred that the filter acts as a band pass filter for signals in the operating frequency band. In the case of operation in the FM band, the pass band is between 88-108 MHz in Europe or between 76-110 MHz in the USA.

A function of the filter is also to act as ESD protection circuit, effectively blocking the major part of ESD pulse spectrum. The filter also eliminates or at least reduces interference from electro magnetic interference (EMI) signals and possibly signals from other antennas provided in the same radio communication device, such as cellular GSM antennas operating at frequencies well above the FM antenna.

The filter and amplifier stage 30 is connected to the output 41 of a transmitter circuit 40, such as an FM transmitter circuit.

The filter and amplifier stage 30 is also arranged for amplifying signals received by the radiating element 10. Signals received, filtered and amplified by the antenna device 1 are supplied to a receiver circuit 42, such as an FM receiver circuit. The FM receiver circuit comprises an RF input 43, which is connected to the filter and amplifier stage 30.

It is preferred that the filter and amplifier stage is provided relatively close to the radiating element 10 in order to minimize parasitic effects and interference from external sources.

A first embodiment implementing the general configuration shown in FIG. 1 will now be described with reference to FIG. 2. It is here seen that the filter and amplifier stage 30 comprises a receiver part in the form of a low noise Rx amplifier 32 arranged for amplifying signals received by the antenna radiating element 10. This Rx amplifier is connected by means of a conductor 33 to the radiating element 10 all the time, i.e., both during transmitting operation and receiving operation. The amplifier could be the low noise amplifier manufactured by Agilent Technologies under the designation ATF55143.

The filter and amplifier stage 30 also comprises a 50 Ohms Single Pole, Single Throw (SPST) electrical switch 34 provided between the radiating element 10 and the transmitter circuit 40 to enable disconnection of the transmitter stage from the radiating element during Rx operation. This switch is necessary if the transmitter circuit 40 has low impedance well below 1000 Ohms on the input thereof, such as 50 Ohms.

Typical impedance values for the arrangement are shown in FIG. 2. These values are given as examples only but show that the output impedance of the transmitter circuit is substantially lower than the input impedance of the Rx amplifier 32. This means that during Rx operation the switch 34 must be off, effectively disconnecting the output of the Tx amplifier from the radiating element 10 and the input of the Rx amplifier 32. Thus, the switch 34 does not influence the Rx performance since it is in off state during Rx operation.

During Tx operation, the switch 34 is on, effectively connecting the output of the transmitter circuit 40 directly to the radiating element 10. Since the radiating element 10 and the input of the Rx amplifier 32 are permanently interconnected, also the output of the transmitter circuit and the input of the Rx amplifier are effectively interconnected during Tx operation. During Tx operation, the Rx amplifier 32 will be turned off.

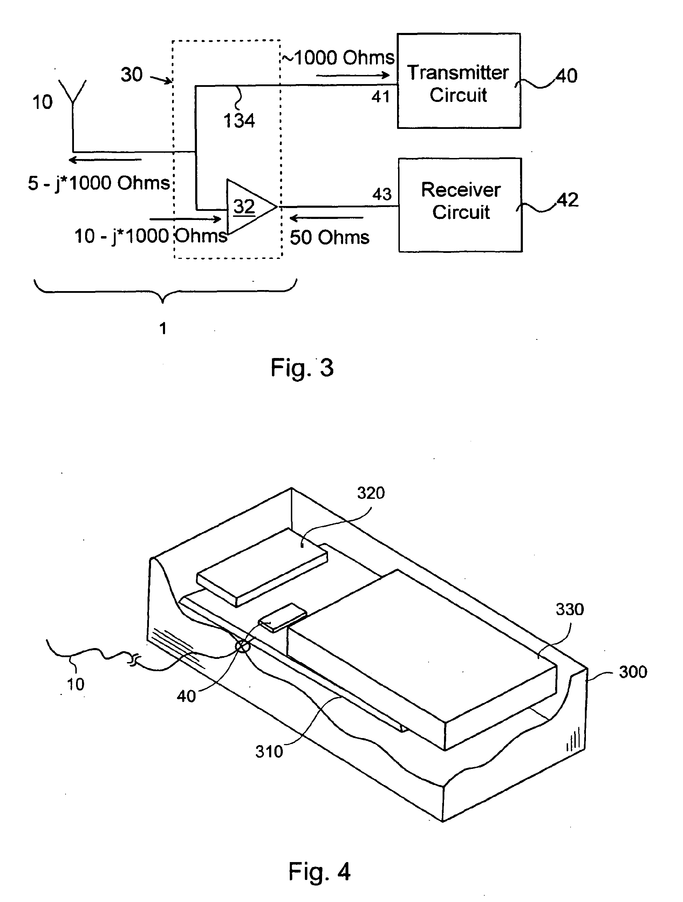

An alternative second embodiment of an antenna device according to the invention will now be described with reference to FIG. 3. This second embodiment is applicable in those cases wherein the transmitter circuit has high output impedance, in the order of 1000 Ohms and above. In such case the output impedance of the transmitter circuit 40 is substantially higher than in the previous case and comparable or higher than the antenna impedance. In the exemplary figures, the output impedance of the transmitter circuit 40 is 1000 Ohms, compared to the antenna impedance of 5-j*1000 Ohms and the input impedance of the Rx amplifier 32 of 10-j*1000 Ohms.

Since the transmitter circuit 40 has high output impedance, no switch is required between on one hand the output of the transmitter circuit 40 and on the other hand the radiating element 10 and the input of the Rx amplifier 32. This is due to the fact that since both the transmitter and the amplifier has high impedance, comparable or higher that the antenna impedance, they load each other only marginally. Instead a conductor 134 interconnects the radiating element 10 and the transmitter circuit 40 all the time, i.e., both during transmitting operation and receiving operation.

Like in the first embodiment, the Rx amplifier 32 is turned off during Tx operation to avoid damage from the power transmitted by the transmitter circuit 40.

A preferred position of the antenna device according to the invention as described above with reference to FIGs. 1-3 will now be described with reference to FIG. 4, wherein the general outlines of the casing of a portable radio communication device 300, such as a mobile phone, is depicted. The casing is shown partially cut away so as to not obscure the position of the antenna device, which could be any of the devices described with reference to FIGS 1-3.

A printed circuit board (PCB) 310 is provided in the casing, having the circuits (not shown) conventionally found in a mobile phone. On the PCB there is also mounted the FM receiver circuit 40. In the upper portion of the casing there is provided an antenna radiating element 320 for receiving and transmitting RF signals for a cellular mobile phone system, such as a GSM system.

A battery package 330 is also provided towards the back of the casing 300. This battery package is connected to the PCB by means of connectors (not shown). The first internal radiating element 10 is preferably placed on the back cover. This radiating element can comprise a headset cable 10 provided as radiating element.

Preferred embodiments of an antenna device according to the invention have been described. However, the person skilled in the art realizes that these can be varied within the scope of the appended claims without departing from the inventive idea.

It is realized that the shape and size of the antenna device according to the invention can be varied within the scope defined by the appended claims. Thus, the exact antenna configurations can be varied so as to correspond to the shape of the radio communication device, desired performance etc.

The above-described embodiments of an antenna device according to the invention have been described as antenna devices adapted for reception of radio signals in the FM frequency band. However, other applications are also possible, such as use for digital video broadcasting (DVB) signals in the frequency range of about 400-800 MHz.

Although an antenna device for a portable radio communication device has been described with reference to its use in a mobile phone, it will be appreciated that the inventive idea is also applicable to other portable radio communication devices, also devices that are portable but primarily intended for stationary use. Examples thereof could be small clocks, such as travel alarm clocks, TV receivers, or game consoles. Yet a possible application of the antenna device according to the invention is in personal digital assistants (PDAs), MP3 and CD players, FM radio receivers, and laptop computers. A further application is in cars. Thus, the term portable radio communication device should be construed in a broad sense.

## Claims

1. An antenna device for a portable radio communication device adapted for receiving radio signals in at least a first operating frequency band, said antenna device comprising
- a radiating element (10),
- an amplifier (32) having an input and output, wherein, during operation, the output of the amplifier is connected to a receiver circuit (42),
- means (134) for interconnecting the radiating element and the output of a transmitter circuit (40) during transmitting operation, and
- a conductor (33) interconnecting the radiating element and the input of said amplifier during both transmitting and receiving operation,
**characterized by**
- the means for interconnecting the radiating element and the output of the transmitter circuit comprising a conductor (134) between on one hand the output (41) of the transmitter circuit (40) and on the other hand the radiating element (10) and the input of the amplifier (32), wherein the output impedance of the transmitter circuit (40) is substantially equal to the input impedance of the amplifier (32).

2. The antenna device according to claim 1, wherein the operating frequency band is the FM band.

3. The antenna device according to claim 1 or 2, wherein the radiating element (10) is non-resonant.

4. A portable radio communication device comprising an antenna device according to claim 1.

## Patentansprüche

1. Antennenvorrichtung für eine tragbare Funkkommunikationsvorrichtung, die zum Empfangen von Funksignalen in mindestens einem ersten Betriebsfrequenzband angepasst ist, wobei die Antennenvorrichtung Folgendes umfasst:
- ein Strahlungselement (10),
- einen Verstärker (32) mit einem Eingang und einem Ausgang, wobei der Ausgang des Verstärkers im Betrieb mit einem Empfängerschaltkreis (42) verbunden ist,
- Mittel (134) zum Verbinden des Strahlungselements und des Ausgangs eines Senderschaltkreises (40) miteinander während eines Sendevorgangs,
- eine Leitung (33), die das Strahlungselement und den Eingang des Verstärkers während sowohl eines Sendevorgangs als auch eines Empfangsvorgangs miteinander verbindet,
**gekennzeichnet dadurch, dass**
- die Mittel zum Verbinden des Strahlungselements und des Ausgangs des Senderschaltkreises miteinander eine Leitung (134) zwischen einerseits dem Ausgang (41) des Senderschaltkreises (40) und andererseits dem Strahlungselement (10) und dem Eingang des Verstärkers (32) umfasst, wobei die Ausgangsimpedanz des Senderschaltkreises (40) im Wesentlichen der Eingangsimpedanz des Verstärkers (32) entspricht.

2. Antennenvorrichtung nach Anspruch 1, wobei es sich bei dem Betriebsfrequenzband um das FM-Band handelt.

3. Antennenvorrichtung nach Anspruch 1 oder 2, wobei das Strahlungselement (10) aperiodisch ist.

4. Tragbare Funkkommunikationsvorrichtung, die eine Antennenvorrichtung nach Anspruch 1 umfasst.

## Revendications

1. Dispositif d'antenne pour un dispositif de communication radio portable, adapté pour recevoir des signaux radio sur au moins une première bande de fréquence d'utilisation, ledit dispositif d'antenne comprenant :
- un élément rayonnant (10),
- un amplificateur (32) possédant une entrée et une sortie, dans lequel, pendant le fonctionnement, la sortie de l'amplificateur est reliée à un circuit récepteur (42),
- un moyen (134) pour l'interconnexion entre l'élément rayonnant et la sortie d'un circuit transmetteur (40) pendant l'opération de transmission, et
- un conducteur (33) pour l'interconnexion entre l'élément rayonnant et l'entrée dudit amplificateur à la fois pendant l'opération de transmission et de réception,
**caractérisé en ce que**
- le moyen pour l'interconnexion entre l'élément rayonnant et la sortie du circuit transmetteur comprend un conducteur (134) entre la sortie (41) du circuit transmetteur (40) d'une part et l'élément rayonnant (10) d'autre part, et l'entrée de l'amplificateur (32), où l'impédance de sortie du circuit transmetteur (40) est substantiellement égale à l'impédance d'entrée de l'amplificateur (32).

2. Dispositif d'antenne selon la revendication 1, dans lequel la bande de fréquence d'utilisation est la bande FM.

3. Dispositif d'antenne selon la revendication 1 ou 2, dans lequel l'élément rayonnant (10) est non-syntonisé.

4. Dispositif de communication radio portable comprenant une antenne selon la revendication 1.
